# EUROPEAN PATENT SPECIFICATION

(11) **EP 4 413 251 B1**
(45) Date of publication and mention of the grant of the patent: **26.11.2025**
(21) Application number: 21794758.9
(22) Date of filing: 04.10.2021
(51) Int. Cl.: F03B 17/00, F01K 11/00, F01K 25/10

(54) **PROCESS AND APPARATUS FOR THE PRODUCTION OF ELECTRIC POWER AVOIDING ENVIRONMENTAL WASTING**
VERFAHREN UND VORRICHTUNG ZUR ERZEUGUNG VON ELEKTRISCHER ENERGIE UNTER VERMEIDUNG VON UMWELTVERSCHWENDUNG
PROCÉDÉ ET APPAREIL POUR LA PRODUCTION D'ÉNERGIE ÉLECTRIQUE ÉVITANT LE GASPILLAGE ENVIRONNEMENTAL

(43) Date of publication of application: 14.08.2024
(73) Proprietor: Brizio, Adriana, 6927 Agra-Collina d'Oro (CH)
(72) Inventor: Brizio, Adriana, 6927 Agra-Collina d'Oro (CH)
(74) Representative: M. Zardi & Co S.A.
(86) International application number: PCT/EP2021/077238
(87) International publication number: WO 2023/057035

(56) References cited:
- DE-A1- 102018 130 412
- US-A1- 2010 146 963
- US-A1- 2019 285 293

## Description

### Field of the invention

The invention relates to an apparatus and process for generation of electric power avoiding environmental wasting.

### Prior art

Most of the current systems for the production of electricity are nowadays provoking incommensurable damages to the health of planet, as they are causing pollution and/or overheating of the atmosphere, are using sources subjected to consumption until their possible exhaustion or, even worse, are resorting to the use of nuclear energy.

The reserves of fossil fuels such as coal, oil and natural gas are limited and non-renewable moreover, their combustion contributes to global warming. The generation in turn of energy through deforestation generates an increase in the greenhouse effect, while water is not everywhere available for powering hydroelectric plants.

The nuclear source presents serious risks when it is not perfectly managed and controlled. Moreover, it gives rise to serious and still unresolved problems connected to the disposal of radioactive waste. Moreover, the current technology relies on uranium which is a limited source.

The technologies for producing energy from renewable sources, including solar panels, photovoltaic panels or wind turbines, have the disadvantage of aleatory output mostly related to the possible absence of light, sun and wind. Besides, they have the non-negligible drawback of visual pollution because of the large aboveground surfaces that must be used for the installation of the photovoltaic, solar panels and because of the large size and considerable height of the wind turbines.

US 2010/146963 discloses an apparatus for generation of electric power according to the preamble of claim 1. DE 10 2018 130412 discloses an energy conversion device designed to use low-grade heat, such as geothermal heat.

### Summary of the invention

The present invention aims to a process and apparatus for generation of electric power which obviates the above-described drawbacks of the prior art.

The present invention aims to provide a process which does not generate any of the afore described problems, particularly no heating of the planet, no pollution, no deforestation, no dependence on coal, oil, water or uranium, no dependence on sun and wind presence. Besides, the invention aims to a process which can be performed in an underground structure to avoid visual pollution.

Moreover, the invention aims to provide a process which does not cause any leakage of water or other kind of liquids into the environment.

These aims are reached with an apparatus and process according to the claims.

An apparatus for generation of electric power according to the invention comprises:
a sealed assembly including at least two chambers and a communication duct, wherein the communication duct is arranged to provide fluid communication between said two chambers;
a working medium in a liquid state contained in at least one of said chambers;
wherein a vacuum condition is provided in the assembly, so that the boiling temperature of said liquid working medium in the assembly is lower than the boiling temperature of the same liquid at ambient pressure;
wherein the volume of said liquid working medium is less than the inner capacity of the whole assembly;
wherein the apparatus is configured in such a way that heating the liquid working medium contained in a first chamber of the assembly induces a transfer of the working medium, either in liquid state or in a vapor state, from said first chamber to a second chamber of the assembly, through a communication duct between said first chamber and second chamber;
the apparatus further comprising at least one energy conversion device arranged in at least one chamber and/or in the communication duct and configured to transform the energy of the working medium travelling through the apparatus into an electric power output,
wherein said energy conversion device includes at least one magnetic element which is arranged to enter into direct contact with the working medium, and said assembly includes more than two chambers forming a sequence of chambers, and wherein the working medium is transferred through the chambers by means of a plurality of transfer steps, each step being a transfer from a first chamber to a second chamber next to the first chamber in the sequence, the transfer of the working medium being operated as a result of heating any of the chambers of the apparatus, wherein the sequence of chambers forms a closed circuit and the process is performed cyclically while the working medium traverses the closed-circuit sequence of chambers.

The invention is based on the finding of collecting and transforming the energy of the working medium travelling through the assembly from one chamber to a next chamber. The working medium, initially contained in a first chamber, is induced to travel to a next second chamber by means of heating the first chamber.

The working medium travels from one chamber to another in a liquid state or in a vapor state preferably without a phase transition, more preferably in a liquid state.

The passage of the working medium from a generic first chamber to a second chamber may be induced by the pressure of vapor formed in the first chamber, as a result of heating. Accordingly, the pressure will push the liquid away from the first chamber and towards the second chamber via a communication duct between them.

To facilitate the above process, the assembly is kept under vacuum, so that a relatively small input of heat is sufficient to vaporize the liquid medium in the first chamber and to establish a pressure which will expel the liquid away from the chamber, through the communication duct and into the second chamber. A similar principle can be observed in the so-called Franklin's Thermoscope. The invention uses this principle to produce energy by exploiting the energy contained in the working medium, preferably liquid, displaced from one chamber to another.

One feature of the invention is the use of an energy conversion device including at least one magnetic element. Said at least one magnetic element enters into a direct contact with the working medium while the working medium is transferred from a chamber to another. The apparatus of the invention may include one or more magnetic elements arranged to rotate and/or translate under the thrust of the working medium. The rotation or translation of the magnetic element(s) is converted into electric power by a suitable coil or solenoid. As explained below, the interaction between magnetic elements and coils/solenoids allows to collect the energy from the working medium contained in a sealed environment.

### Detailed description of the invention

The assembly, particularly the working medium circuit, is maintained under vacuum. The higher is the vacuum degree produced in a closed chamber, the lower is the temperature at which a liquid contained in the same chamber starts its boiling process. The invention makes use of this principle to reduce the heat input required to vaporize the working medium.

The working medium may be a pure liquid or a liquid mixture and has preferably a boiling point lower than the boiling point of water. For instance, ethyl alcohol or liquid ether can be used as working medium.

The appropriate vacuum degree and the kind of the adopted liquid may be selected depending on the environmental conditions of any apparatus, that is the altitude and/or the outside ambient temperature.

The number of chambers and communication ducts in the assembly may vary. Particularly, each pair of chambers may be connected by one or more communication ducts. **In** some embodiments, two adjoining chambers may be collected by a single duct. **In** other embodiments, adjoining chambers may be connected by two or more ducts. When multiple connection ducts are provided, one or more ducts may act as return ducts to provide a continuous circulation of the working medium.

**In** an embodiment, the assembly is configured so that one or more of the communication ducts act as connecting elements and/or structural supporting elements for two or more of the chambers.

**In** an embodiment, the assembly is configured so that the working medium effluent from a first chamber through a communication duct returns in the same first chamber either through the same communication duct or through a separate communication duct.

The assembly includes more than two chambers forming a sequence of chambers, wherein the working medium is transferred through the chambers. Each transfer can be regarded as a transfer of the working medium from a first chamber or starting chamber to a second chamber or destination chamber, next to the first chamber in the sequence, the transfer of the working medium being operated as a result of heating the starting chamber.

The sequence of chambers forms a closed circuit and the process is performed cyclically while the working medium traverses the closed-circuit sequence of chambers. Hence for example a working medium may start the process from a first chamber and after passages through several chambers in the assembly, may return into the same first chamber.

**In** some embodiments, suitable barriers are provided in connection with the chambers and/or with the communication ducts, said barriers being driven to prevent a backflow of the working medium from one chamber to a preceding chamber. Hence it is provided that the working medium follows the proper direction from a starting chamber through a destination chamber in the assembly.

The energy conversion device of the assembly may comprise rotating and/or displaceable magnetic elements. A rotating magnetic element is an element arranged to rotate around an axis. A displaceable magnetic element is arranged to travel through the assembly, for example between the chambers and through the connection ducts. The energy conversion device may include any combination of rotating and displaceable elements.

The energy conversion device of the assembly further includes at least one coil or solenoid inductively coupled with a magnetic element, arranged so that a rotation or displacement of the magnetic element relative to the coil or solenoid induces an electric current in the coil or solenoid.

**In** an embodiment, said energy conversion device includes at least a rotating magnetic element, said rotating magnetic element being arranged to rotate under the thrust of said working medium when said working medium is displaced from one chamber to another chamber. A preferred, but not exclusive, shape of said rotating magnetic element/elements consists in a helix shape.

Said rotating magnetic element(s) may be supported by a rotating bar or by a stationary bar, said bar being preferably inside a communication duct. More preferably, the axis of said bar is parallel to a longitudinal axis of said communication duct. **In** case of a rotating bar, the rotating magnetic elements may be fixed to the bar, so that the assembly of the rotating bar and magnetic elements form a rotating screw. **In** case of a fixed bar, the rotating magnetic elements may rotate around the bar, for example being mounted on suitable bearings.

**In** an embodiment, the apparatus includes a plurality of rotating bars to support rotating magnetic elements and at least one first rotating bar is connected to one or more second rotating bar(s) in such a way to increase the rotational speed of said one or more second rotating bar(s). The rotating bars may be connected by suitable transmission means to increase the rotational speed.

Said energy conversion device may include at least one coil or solenoid inductively coupled with the rotating magnetic element, so that a rotation of the rotating magnetic element, and therefore a rotation of its magnetic poles, induces an electric current in the coil or solenoid.

Particularly preferably, a coil or solenoid may be located in a position adjacent and preferably wrapped onto an enclosure within which the rotating magnetic element is disposed to rotate. Alternatively, a coil or solenoid constitute itself an enclosure within which said rotating magnetic element is disposed to rotate. For example, a coil may structurally constitute a communication duct between two chambers.

In some embodiments, the energy conversion device includes at least one displaceable magnet arranged to be displaced by the working medium from one chamber to another through a communication duct. Preferably the apparatus includes at least one device, preferably in the form of a grid casing, arranged in a chamber to guide said displaceable magnet when travelling through the chamber and prevent said magnet from falling into the chamber. Preferably a suitable grid casing is provided in each chamber of the apparatus.

According to necessity, some or all portions of the assembly of the invention may be differently wrapped. One or more of said portion or portions may be wrapped by one or more solenoid or solenoids, or by coils and solenoids together, while some of said portions are formed by the afore described coils and/or solenoid or solenoids themselves, as well as some of said portions may be without any wrapping.

The displaceable magnets may travel separately in the apparatus or be joined together to form a single displaceable element, possibly with suitable spacers between them.

Particularly preferably, the displaceable magnets are arranged so that, when travelling through the device, each pole of a magnet faces a pole of a preceding or following magnet of the same polarity.

Said energy conversion device may include at least one coil or solenoid and at least one magnetic element arranged to rotate or move relative to the coil or solenoid, thus providing a variable magnetic field in the coil or solenoid and an induced electromotive force.

In an embodiment, said magnetic elements include permanent magnets.

Said communication duct(s) is/are made preferably of an electrically conductive metal.

An embodiment includes at least one communication duct wherein a coil or solenoid is wrapped around the duct or a coil or solenoid constitutes the communication duct.

An embodiment includes a plurality of coils or solenoids, wherein at least some of the coils or solenoids are electrically connected to each other.

The invention is now further elucidated with reference to various embodiments of the same.

In the various embodiments, the communication ducts may be in the form of a tube. Said tube puts into communication the cavities of said opposite chambers, said tube being of proper length and diameter.

The whole ensemble is liquid and gas sealed.

A liquid is inserted into the aforesaid ensemble before sealing and is preferably gathered into a first chamber. The volume of the liquid will be less than the whole inside volume of the ensemble in such a size that the liquid can freely flow within the afore described communication tube from one chamber to another chamber in communication with the first one.

A proper vacuum degree is provided inside said ensemble before sealing, to such an extent that a minimal heating energy is requested to force said liquid to start its boiling process, consequently to find an escape route from the aforesaid first chamber through the afore described communication tube. Particularly, the heat input is lower than the heat input necessary to induce boiling at the ordinary ambient conditions outside the assembly of the invention.

Both providing a vacuum degree, and selecting a liquid having a boiling point lower than the water boiling point, may be conveniently adopted in combination.

After matching the above-described conditions, heating is applied to the liquid which is collected into a first chamber, to such an extent as to induce the same liquid to start boiling.

Having provided, as above described, a duct in the form of a tube departing from said first chamber and putting into communication said first chamber with an opposite communicating one, said liquid finds its escape route through said tube duct to collect into the opposite communicating chamber.

Depending on the position of the afore described tube duct in the respect of the afore described chambers, said liquid may found its escape maintaining its liquid consistency, or said liquid assumes under heating a vapor consistency and it becomes liquid again, due to condensation, once collected in an opposite chamber.

In a preferred embodiment the afore described communication tube duct is positioned in a lower portion of the chambers wall in such a way that, in consequence of heating, said liquid displaces from a first chamber to a following one while keeping its liquid state.

Once the aforesaid liquid has collected into an opposite communicating chamber through the afore described communication tube duct, heating can be again applied to said liquid to such an extent that it is forced to find a further escape from said opposite communicating chamber. In this way, by applying the heating consecutively to one chamber and to a communicating one, a consecutive displacement of said liquid is originated.

The afore described coil/coils and/or said solenoid/solenoids may be located in a position adjacent and preferably wrapped onto the portion or portions of the aforesaid assembly within which the rotating magnetic element/elements is/are induced to rotate. In such a case said portion/portions will be conveniently made of a conductive metal.

Alternatively, said coil/coils and/or said solenoid or solenoids themselves are shaped, twisted and positioned in such an intimate, reciprocal closeness as to constitute themselves part of the ensemble portion within which said magnetic element or elements is/are induced to rotate.

In the event that the aforesaid chambers and tube ducts constitute a closed circuit, the induced electricity may be accumulated from any coil or coils and/or solenoid/solenoids to give place to a final output quantity.

In an embodiment, the afore described magnetic element/elements departing from one of the afore described chambers, enters/enter the following communicating chamber by leaving the communication tube duct. This allows to avoid generation of a magnetic field inside said tube duct, according to Lenz's law, which would oppose the entry of a next magnetic element. In this way a flow of permanent magnets can be performed in sequence, so as to ensure a constant induced electric charge in the coil/coils or solenoid/solenoids.

With regard to both the adoption of rotating magnetic elements and of flowing magnetic elements, the higher the speed of movement of said movable magnetic element/elements and the higher the number of spires forming the coil/coils and or in the solenoid/solenoids, the greater will be the quantity of induced electricity.

It should be noted that, once the initial chamber has been heated by means of external sources, the energy necessary to heat the subsequent chambers is much lower than the energy initially used, since the working medium that moves from one chamber to another loses only a small degree of heat.

Moreover, the apparatus is able of partially self-feeding by employing part of the final electric energy, outgoing from the same, in order to repeat from the beginning the heating of the same apparatus chambers.

Conveniently the heating degree, at which both the rotating magnetic elements and the flowing magnetic elements will be subjected, shall not be higher than the temperature degree at which said elements lose their magnetic charge. In any case it is advisable that the temperature degree will not reach the Curie Point relative to said magnetic elements.

Should said elements lose their magnetic charge, owing to a special case or to deterioration of the plants due to age, said elements will be subjected to a re-magnetization process, resorting to known means.

### Description of the figures

Fig. 1 is a schematic representation of an apparatus for generating electric power with a dual-chamber configuration, which is not part of the present invention.
Fig. 2 is a schematic representation of the apparatus for generating electric power of Fig.1 with a closed-circuit configuration.
Fig. 3 is a schematic representation of an apparatus for generating electric power with a multiple-chambers configuration, which is not part of the present invention.
Fig. 4 is a schematic representation of an apparatus for generating electric power according to an embodiment of the invention with a closed-circuit configuration and according to a multiple-chambers configuration.
Fig. 5 in the embodiments a) to c) represents a series of apparatus for generating electric power according to the configurations of Fig. 1, 3 and 4 additionally provided with solenoids.
Fig. 6 shows a detail view of an apparatus for generating electric power according to an embodiment of the invention.
Fig. 7 shows a detail view of an apparatus for generating electric power according to an alternative embodiment of the invention.

### Detailed description of preferred embodiments

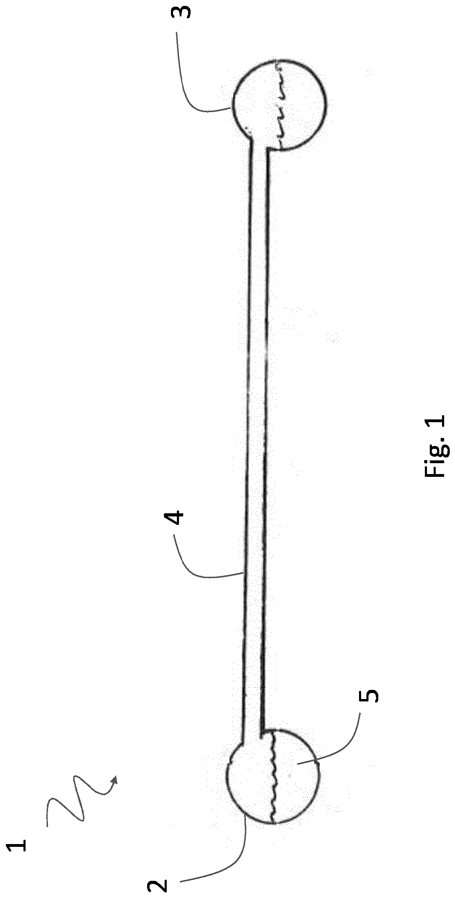

In the embodiment of Fig. 1, it is shown that the apparatus for generating electric power includes a sealed assembly 1 including a first chamber 2 and a second chamber 3 communicating between each other by means of a duct 4. It can be noted that the communication duct is in the form of a tube and a working liquid 5 is enclosed in said first chamber 2.

The apparatus works by providing heat to said working medium so to promote a transfer of said working medium 5 from said first chamber 2 to said second chamber 3 via said communication duct 4 meanwhile transforming the energy of the working medium into electric power by means of an energy conversion device not shown in the figure, which may be arranged for example along the duct 4. Once the liquid 5 is collected in the second chamber 3, said second chamber 3 may be heated to transfer the liquid 5 back into the first chamber 2. The process can be repeated cyclically.

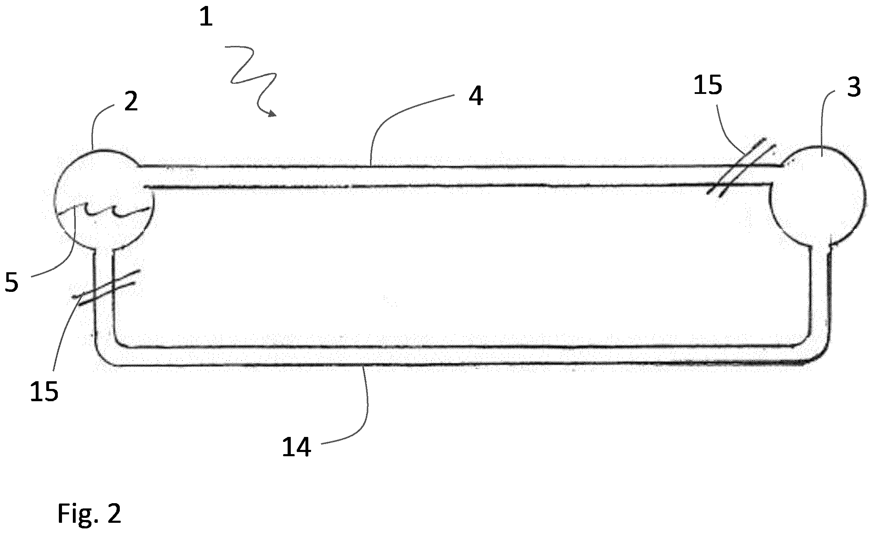

Fig. 2 shows that the first chamber 2 of the apparatus is in fluid communication with the second chamber 3 by means of the above-mentioned communicating duct 4 and by means of a separate return duct 14.

The assembly 1 is also provided with two barriers 15 in connection with the communication duct 4 and with the return duct 14. Said barriers 15 are arranged to prevent the backflow of the working medium 5 from one chamber to the preceding one.

According to the embodiment of Fig. 2, the first chamber 2 is heated to transfer the working medium 5 to the second chamber 3 meanwhile generating electric power. Afterwards, the second chamber 3 is heated to transfer the working medium 5 back into the first chamber 2 via the return duct 14. The process can be repeated cyclically thereby obtaining a continuous production of electric power.

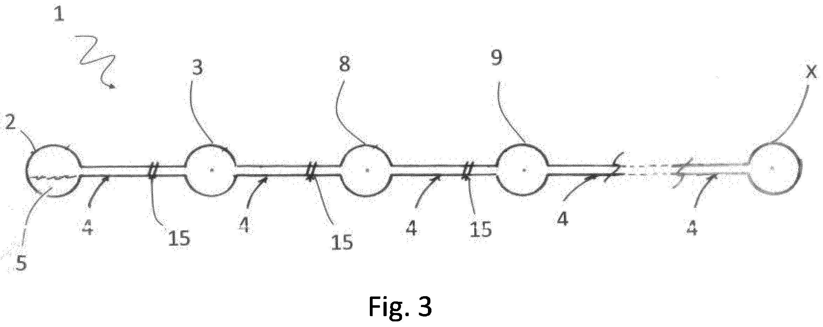

In Fig. 3, it is shown an apparatus for generating electric power provided with multiple chambers 2, 3, 8 and 9. Each chamber is separated from another chamber through a communication duct 4. Each communication duct 4 is provided with a barrier 15 to prevent the backflow of liquid. The last portion of tube 4 indicates the possibility of adopting an indefinite additional number of chambers, until a last chamber denoted by X in the figure, provided that the whole ensemble is sealed.

In this embodiment, heating is applied in sequence first to the first chamber 2 to drive the working fluid 5 to the second chamber 3 meanwhile generating electric power. Afterwards, the process is repeated in sequence by providing heat to the second chamber 3 to transfer the working fluid 5 to a third chamber 8 meanwhile generating electric power. The process is repeated again in sequence with the remaining chamber 9 and possible following ones. As in Fig. 1, the liquid 5 can be transferred back by heating the chambers in the appropriate sequence.

Fig .4 shows a variation of the embodiment of Fig. 3 wherein multiple chambers are arranged in a closed-circuit configuration, in accordance with the invention. As in Fig. 2, by heating the chambers in the appropriate sequence, the liquid 5 can circulate continuously in the assembly.

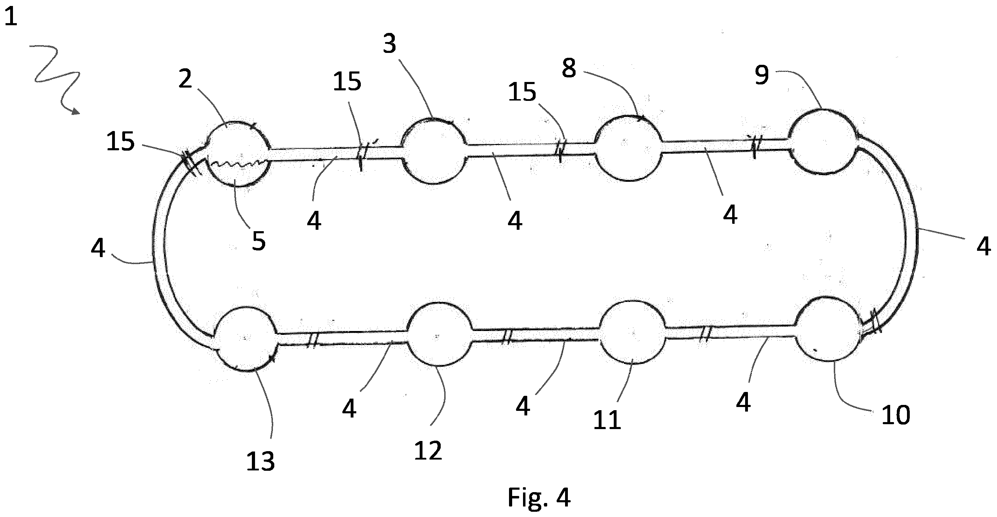

It has to be noted that Fig. 4 illustrates one duct 4 to connect each pair of adjacent chambers, however in other embodiments more than one duct may be provided between adjacent chambers.

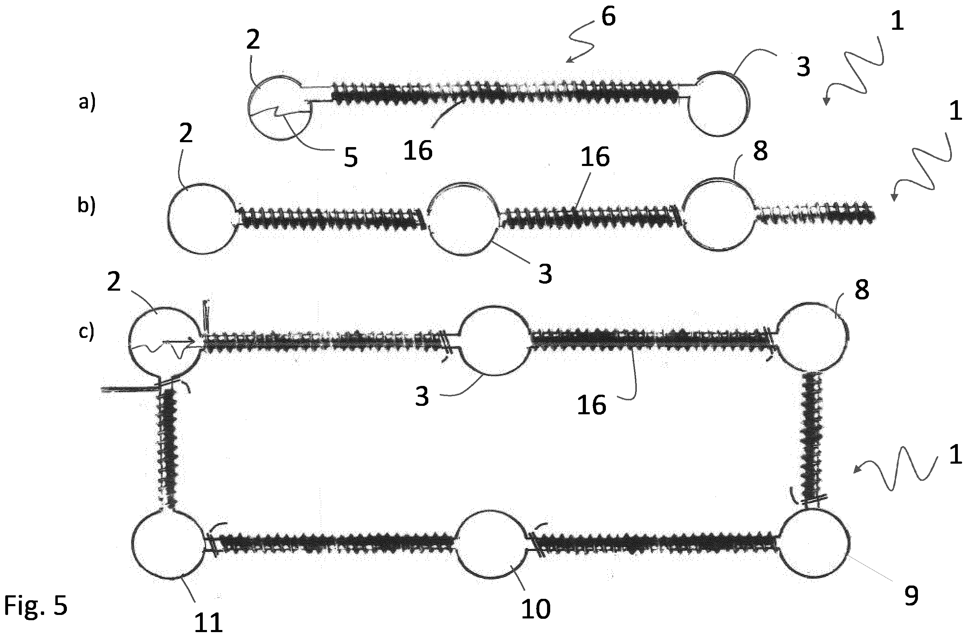

Fig. 5 illustrates embodiments a), b) or c) wherein the communication ducts 4 are wrapped with solenoids 16. Said solenoids 16 can generate electric power due to their interaction with rotating and/or travelling magnetic elements inside the ducts 4. It should be noted that power is transferred from inside to the outside of the assembly via the interaction between the travelling or rotating magnets and the coils or solenoids.

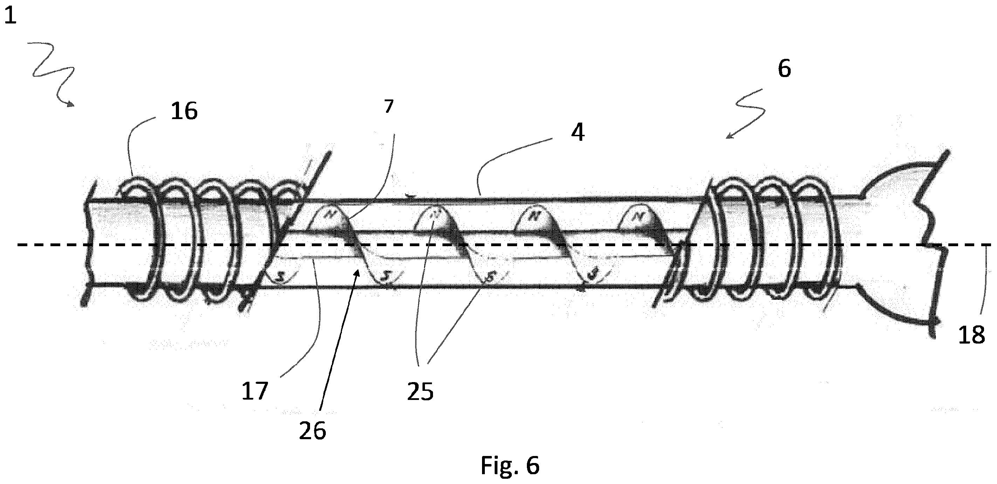

Fig. 6 illustrates a preferred embodiment of an energy conversion device 6 arranged in/on a duct 4.

The energy conversion device 6 in this embodiment includes a solenoid 16 inductively coupled with a rotating magnetic element 7 including helix shaped blades 26 supported by a bar 17. Said bar 17 may be either a rotating bar or a stationary bar.

Each blade 26 has magnetic poles 25 and can either be integral with the rotating bar 17 or rotate around the same bar. The bar 17 is provided with an axis parallel to a longitudinal axis 18 of the communication duct 4.

A rotation of the magnetic element 7 relative to the solenoid 16 is induced by the thrust of the working medium 5 when is displaced from one chamber to another chamber. Said rotation of the rotating magnetic element 7, and therefore a rotation of its magnetic poles 25, induces an electric current in the solenoid 16.

It should be noted that thanks to the inductive coupling, power is transferred from the magnetic element 7 inside the duct 4 to the solenoid 16 outside the duct in a contactless manner without the need of connection means passing through the duct.

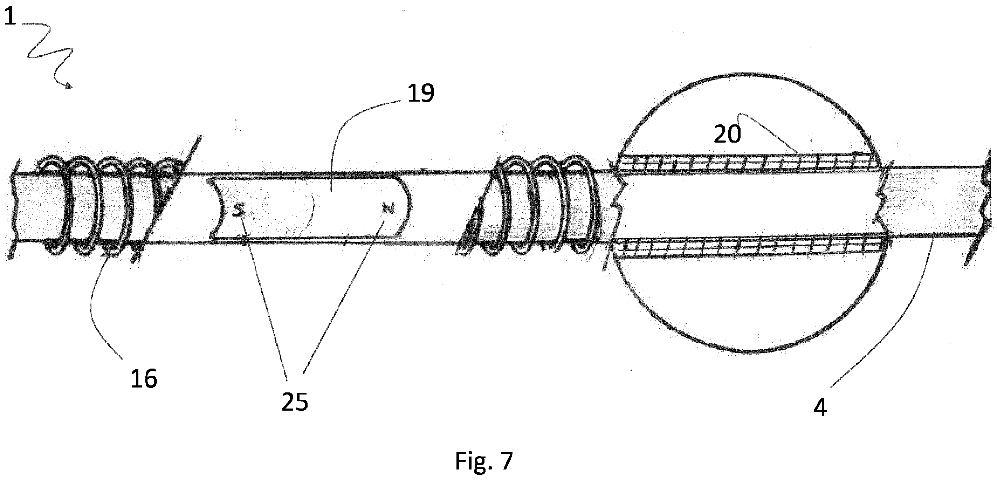

Fig. 7 shows an alternative embodiment, wherein the magnetic elements are displaceable magnetic elements 19.

The displaceable magnetic elements 19 are arranged to travel through the assembly, for example between chambers and through connecting ducts. Accordingly, electric power is induced by the displacement of said elements 19.

**In** figure, it can be noted that the apparatus includes a grid casing 20 arranged in a chamber to guide said displaceable magnet elements 19 when travelling through the chamber and prevents said magnet 19 from falling into said chamber. When multiple chambers are provided, each chamber of the apparatus may be provided with a respective grid casing 20.

## Claims

1. Apparatus for generation of electric power comprising:
a sealed assembly (1) including at least two chambers (2, 3) and a communication duct (4), wherein the communication duct (4) is arranged to provide fluid communication between said two chambers (2, 3);
a working medium (5) in a liquid state contained in at least one of said chambers (2, 3);
wherein the volume of said liquid working medium (5) is less than the inner capacity of the whole assembly;
wherein the apparatus is configured in such a way that heating the liquid working medium (5) contained in a first chamber (2) of the assembly induces a transfer of the working medium (5), either in liquid state or in a vapor state, from said first chamber (2) to a second chamber (3) of the assembly, through a communication duct (4) between said first chamber (2) and second chamber (3);
the apparatus further comprising at least one energy conversion device (6) arranged in at least one of said chambers (2, 3) and/or in the communication duct (4) and configured to transform energy of the working medium (5) travelling through the apparatus into an electric power output,
wherein said energy conversion device includes at least one magnetic element (7, 19), said at least one magnetic element being arranged to enter into direct contact with the working medium,
**characterized in that**:
a vacuum condition is provided in the assembly (1), so that the boiling temperature of said liquid working medium (5) in the assembly (1) is lower than the boiling temperature of the same liquid at ambient pressure; and
said assembly (1) includes more than two chambers forming a sequence of chambers, and wherein the working medium (5) is transferred through the chambers by means of a plurality of transfer steps, each step being a transfer from a first chamber to a second chamber next to the first chamber in the sequence, the transfer of the working medium (5) being operated as a result of heating any of the chambers of the apparatus, wherein the sequence of chambers forms a closed circuit and the process is performed cyclically while the working medium (5) traverses the closed-circuit sequence of chambers.

2. Apparatus according to claim 1), wherein said liquid working medium (5) is a pure liquid or a liquid mixture and has a boiling point lower than the boiling point of water.

3. Apparatus according to any of the previous claims wherein said assembly (1) is configured so that one or more of the communication ducts (4) act as connecting elements and/or supporting elements for two or more of the chambers (2, 3, 8 to 13).

4. Apparatus according to any of the previous claims wherein the assembly (1) is configured so that the working medium (5) effluent from said first chamber (2) through a communication duct (4) returns in the same first chamber (2) either through the same communication duct (4) or through a separate communication duct (14).

5. Apparatus according to any of the previous claims wherein one or more barriers (15) are provided in connection with the chambers and/or with the communication ducts (4), said barriers (15) being driven to prevent a backflow of the working medium (5) from one chamber to a preceding chamber.

6. Apparatus according to any of the previous claims wherein said energy conversion device includes at least one rotating magnetic element (7) or displaceable magnetic element (19), and at least one coil or solenoid (16) inductively coupled with the magnetic element, arranged so that a rotation or displacement of the magnetic element (7, 19) induces an electric current in the coil or solenoid (16).

7. Apparatus according to any of the previous claim wherein said energy conversion device includes at least one rotating magnetic element (7) which is arranged to rotate under the thrust of said working medium (5) when said working medium (5) is displaced from one chamber to another chamber.

8. Apparatus according to claim 7 wherein said rotating magnetic element (7) is supported by a bar (17), said bar (17) being preferably inside a communication duct (4), wherein the axis of said bar is preferably parallel to a longitudinal axis (18) of said communication duct, wherein either said bar (17) is a rotating bar dragged by said rotating elements (7) under the thrust of said working medium, or said bar (17) is a stationary bar while said rotating elements (7) rotate around said bar.

9. Apparatus according to claim 8 including a plurality of rotating bars to support rotating magnetic elements and wherein at least one first rotating bar is connected to one or more second rotating bar(s) in such a way to increase the rotational speed of said one or more second rotating bar(s).

10. Apparatus according to claim 8 or 9 wherein:
a coil or solenoid (16) is located in a position adjacent and preferably wrapped onto an enclosure within which the rotating magnetic element (7) is disposed to rotate, or
a coil or solenoid (16) constitutes itself an enclosure within which said rotating magnetic element is disposed to rotate, so that the rotation of the rotating magnetic element produces an electric current in the coil or solenoid (16).

11. Apparatus according to any of the previous claims wherein said energy conversion device (6) includes at least one displaceable magnet (19) arranged to be displaced by the working medium (5) from one chamber to another through a communication duct (4), further including at least one device, preferably in the form of a grid casing (20), arranged in a chamber to guide said displaceable magnet (19) when travelling through the chamber and prevent said magnet from falling into the chamber.

12. Apparatus according to claim 11 including a plurality of displaceable magnets (19) joined together, possibly with spacer elements between them, to form a single displaceable element.

13. Apparatus according to claim 11 or 12 wherein displaceable magnets (19) are arranged so that, when travelling through the device, each pole (25) of a magnet faces a pole of a preceding or following magnet of the same polarity.

14. Apparatus according to any of the previous claims wherein said energy conversion device (6) includes at least one coil or solenoid (16) and at least one magnetic element (7, 19) arranged to rotate or move relative to the coil or solenoid (16), thus providing a variable magnetic field in the coil or solenoid (16) and an induced electromotive force.

15. Apparatus according to any of the previous claims wherein said magnetic elements (7, 19) include permanent magnets.

16. Apparatus according to any of the previous claims wherein said communication duct(s) (4) is/are made of an electrically conductive metal.

17. Apparatus according to any of the previous claims including at least one communication duct (4) wherein a coil or solenoid (16) is wrapped around said duct, or a coil or solenoid constitutes said communication duct (4).

18. Apparatus according to any of the previous claims, comprising a plurality of coils or solenoids (16), wherein at least some of the coils or solenoids are electrically connected to each other.

19. Apparatus according to any of the previous claims including a combination of rotatable magnetic elements (7) and displaceable magnets (19).

20. A process for the production of electric power comprising:
providing an apparatus with a sealed assembly (1) according to any of claims 1 to 19;
providing a working medium (5) in a liquid state contained in at least one of the chambers (2, 3) of said sealed assembly;
forming a vacuum condition in the assembly (1), so that the boiling temperature of said liquid working medium (5) in the assembly is lower than the boiling temperature of the same liquid at ambient pressure;
heating the liquid working medium (5) contained in a first chamber (2) of the assembly so to induce a transfer of the working medium from said first chamber (2) to a second chamber (3) of the assembly (1), through a communication duct (4) between said first chamber (2) and second chamber (3);
transforming energy of the working medium travelling through the apparatus into a power output by means of at least one energy conversion device (6) arranged in at least one of said chambers (2, 3) and/or in the communication duct (4), wherein said device (6) includes at least one magnetic element (7, 19) arranged to enter into direct contact with the working medium;
wherein the working medium (5) is transferred from said first chamber (2) to said second chamber (3) in a liquid state or in a gaseous state.

21. A process according to claim 20 wherein, during the process, the working medium (5) has a temperature below the Curie point of any magnetic element of the energy conversion device (6) to avoid de-magnetization.

## Patentansprüche

1. Vorrichtung zur Erzeugung von elektrischer Leistung, umfassend:
eine abgedichtete Anordnung (1), die mindestens zwei Kammern (2, 3) und einen Kommunikationskanal (4) einschließt, wobei der Kommunikationskanal (4) eingerichtet ist, um eine Fluidkommunikation zwischen den zwei Kammern (2, 3) bereitzustellen;
ein Arbeitsmedium (5) in einem flüssigen Zustand, das in mindestens einer der Kammern (2, 3) enthalten ist;
wobei das Volumen des flüssigen Arbeitsmediums (5) geringer als die Innenkapazität der gesamten Anordnung ist;
wobei die Vorrichtung auf solche Weise konfiguriert ist, dass ein Erwärmen des flüssigen Arbeitsmediums (5), das in einer ersten Kammer (2) der Anordnung enthalten ist, eine Übertragung des Arbeitsmediums (5) entweder in einem flüssigen Zustand oder in einem Dampfzustand von der ersten Kammer (2) zu einer zweiten Kammer (3) der Anordnung durch einen Kommunikationskanal (4) zwischen der ersten Kammer (2) und der zweiten Kammer (3) induziert;
die Vorrichtung ferner umfassend mindestens ein Energieumwandlungsmittel (6), das in mindestens einer der Kammern (2, 3) und/oder in dem Kommunikationskanal (4) eingerichtet und konfiguriert ist, um Energie des Arbeitsmediums (5), das durch die Vorrichtung passiert, in eine elektrische Leistungsausgabe umzuwandeln,
wobei die Energieumwandlungsvorrichtung mindestens ein magnetisches Element (7, 19) einschließt, wobei das mindestens eine magnetische Element eingerichtet ist, um in direkten Kontakt mit dem Arbeitsmedium zu treten,
**dadurch gekennzeichnet, dass:**
ein Vakuumzustand in der Anordnung (1) bereitgestellt ist, sodass die Siedetemperatur des flüssigen Arbeitsmediums (5) in der Anordnung (1) geringer als die Siedetemperatur derselben Flüssigkeit bei Umgebungsdruck ist; und
wobei die Anordnung (1) mehr als zwei Kammern einschließt, die eine Kammersequenz ausbilden, und wobei das Arbeitsmedium (5) mittels einer Vielzahl von Übertragungsschritten durch die Kammern übertragen wird, wobei jeder Schritt eine Übertragung von einer ersten Kammer zu einer zweiten Kammer ist, die in der Sequenz neben der ersten Kammer liegt, und die Übertragung des Arbeitsmediums (5) als ein Resultat des Erwärmens einer beliebigen der Kammern der Vorrichtung betrieben wird, wobei die Kammersequenz einen geschlossenen Kreislauf ausbildet und der Prozess zyklisch durchgeführt wird, während das Arbeitsmedium (5) die Kammersequenz in dem geschlossenen Kreislauf durchläuft.

2. Vorrichtung nach Anspruch 1, wobei das flüssige Arbeitsmedium (5) eine reine Flüssigkeit oder ein Flüssigkeitsgemisch ist und einen Siedepunkt aufweist, der geringer als der Siedepunkt von Wasser ist.

3. Vorrichtung nach einem der vorstehenden Ansprüche, wobei die Anordnung (1) konfiguriert ist, sodass ein oder mehrere der Kommunikationskanäle (4) als Verbindungselemente und/oder Stützelemente für zwei oder mehr der Kammern (2, 3, 8 bis 13) dienen.

4. Vorrichtung nach einem der vorstehenden Ansprüche, wobei die Anordnung (1) konfiguriert ist, sodass das Arbeitsmedium (5), das aus der ersten Kammer (2) durch einen Kommunikationskanal (4) austritt, in dieselbe erste Kammer (2) entweder durch denselben Kommunikationskanal (4) oder durch einen separaten Kommunikationskanal (14) zurückkehrt.

5. Vorrichtung nach einem der vorstehenden Ansprüche, wobei eine oder mehrere Barrieren (15) in Verbindung mit den Kammern und/oder den Kommunikationskanälen (4) bereitgestellt sind, wobei die Barrieren (15) angetrieben werden, um einen Rückfluss des Arbeitsmediums (5) von einer Kammer zu einer vorhergehenden Kammer zu verhindern.

6. Vorrichtung nach einem der vorstehenden Ansprüche, wobei die Energieumwandlungsvorrichtung mindestens ein rotierendes magnetisches Element (7) oder ein verschiebbares magnetisches Element (19) und mindestens eine Spule oder ein Solenoid (16) einschließt, die/das mit dem magnetischen Element induktiv gekoppelt ist und eingerichtet ist, sodass eine Rotation oder Verschiebung des magnetischen Elements (7, 19) einen elektrischen Strom in der Spule oder dem Solenoid (16) induziert.

7. Vorrichtung nach einem der vorstehenden Ansprüche, wobei die Energieumwandlungsvorrichtung mindestens ein rotierendes magnetisches Element (7) einschließt, das eingerichtet ist, um unter dem Schub des Arbeitsmediums (5) zu rotieren, wenn das Arbeitsmedium (5) von einer Kammer zu einer anderen Kammer verschoben wird.

8. Vorrichtung nach Anspruch 7, wobei das rotierende magnetische Element (7) durch eine Stange (17) gestützt wird, wobei sich die Stange (17) vorzugsweise innerhalb eines Kommunikationskanals (4) befindet, wobei die Achse der Stange vorzugsweise parallel zu einer Längsachse (18) des Kommunikationskanals ist, wobei entweder die Stange (17) eine rotierende Stange ist, die durch die rotierenden Elemente (7) unter dem Schub des Arbeitsmediums gezogen wird, oder die Stange (17) eine stationäre Stange ist, während die rotierenden Elemente (7) um die Stange rotieren.

9. Vorrichtung nach Anspruch 8, die eine Vielzahl von rotierenden Stangen einschließt, um rotierende magnetischer Elemente zu stützen, und wobei mindestens eine erste rotierende Stange mit einer oder mehreren zweiten rotierenden Stangen auf solche Weise verbunden ist, um die Rotationsgeschwindigkeit der einen oder der mehreren zweiten rotierenden Stangen zu erhöhen.

10. Vorrichtung nach Anspruch 8 oder 9, wobei:
sich eine Spule oder ein Solenoid (16) in einer Position angrenzend an ein Gehäuse befindet, innerhalb dessen das rotierende magnetische Element (7) eingerichtet ist, um zu rotieren, und vorzugsweise darauf gewickelt ist, oder
eine Spule oder ein Solenoid (16) selbst ein Gehäuse darstellt, innerhalb dessen das rotierende magnetische Element eingerichtet ist, um zu rotieren, sodass die Rotation des rotierenden magnetischen Elements einen elektrischen Strom in der Spule oder dem Solenoid (16) erzeugt.

11. Vorrichtung nach einem der vorstehenden Ansprüche, wobei das Energieumwandlungsmittel (6) mindestens einen verschiebbaren Magneten (19) umfasst, der eingerichtet ist, um durch das Arbeitsmedium (5) von einer Kammer zu einer anderen durch einen Kommunikationskanal (4) verschoben zu werden, und ferner mindestens ein Mittel, vorzugsweise in der Form einer Gitterhülle (20), einschließt, das in einer Kammer eingerichtet ist, um den verschiebbaren Magneten (19), wenn er durch die Kammer passiert, zu führen und zu verhindern, dass der Magnet in die Kammer fällt.

12. Vorrichtung nach Anspruch 11, die eine Vielzahl von verschiebbaren Magneten (19) einschließt, die gegebenenfalls mit Abstandselementen dazwischen miteinander verbunden sind, um ein einziges verschiebbares Element auszubilden.

13. Vorrichtung nach Anspruch 11 oder 12, wobei verschiebbare Magnete (19) eingerichtet sind, sodass, wenn sie durch das Mittel passieren, jeder Pol (25) eines Magneten einem Pol eines vorhergehenden oder nachfolgenden Magneten gleicher Polarität gegenübersteht.

14. Vorrichtung nach einem der vorstehenden Ansprüche, wobei das Energieumwandlungsmittel (6) mindestens eine Spule oder ein Solenoid (16) und mindestens ein magnetisches Element (7, 19) einschließt, das eingerichtet ist, um relativ zu der Spule oder dem Solenoid (16) zu rotieren oder sich zu bewegen, wodurch ein variables Magnetfeld in der Spule oder dem Solenoid (16) und eine induzierte elektromotorische Kraft bereitgestellt wird.

15. Vorrichtung nach einem der vorstehenden Ansprüche, wobei die magnetischen Elemente (7, 19) Permanentmagnete einschließen.

16. Vorrichtung nach einem der vorstehenden Ansprüche, wobei der/die Kommunikationskanal/-kanäle (4) aus einem elektrisch leitfähigen Metall hergestellt ist/sind.

17. Vorrichtung nach einem der vorstehenden Ansprüche, die mindestens einen Kommunikationskanal (4) umfasst, wobei eine Spule oder ein Solenoid (16) um den Kanal gewickelt ist oder eine Spule oder ein Solenoid den Kommunikationskanal (4) darstellt.

18. Vorrichtung nach einem der vorstehenden Ansprüche, umfassend eine Vielzahl von Spulen oder Solenoiden (16), wobei mindestens einige der Spulen oder Solenoide elektrisch miteinander verbunden sind.

19. Vorrichtung nach einem der vorstehenden Ansprüche, die eine Kombination aus rotierbaren magnetischen Elementen (7) und verschiebbaren Magneten (19) umfasst.

20. Prozess für die Erzeugung von elektrischer Leistung, umfassend:
Bereitstellen einer Vorrichtung mit einer abgedichteten Anordnung (1) nach einem der Ansprüche 1 bis 19;
Bereitstellen eines Arbeitsmediums (5) in einem flüssigen Zustand, das in mindestens einer der Kammern (2, 3) der abgedichteten Anordnung enthalten ist;
Ausbilden eines Vakuumzustands in der Anordnung (1), sodass die Siedetemperatur des flüssigen Arbeitsmediums (5) in der Anordnung geringer als die Siedetemperatur derselben Flüssigkeit bei Umgebungsdruck ist;
Erwärmen des flüssigen Arbeitsmediums (5), das in einer ersten Kammer (2) der Anordnung enthalten ist, um eine Übertragung des Arbeitsmediums von der ersten Kammer (2) zu einer zweiten Kammer (3) der Anordnung (1) durch einen Kommunikationskanal (4) zwischen der ersten Kammer (2) und der zweiten Kammer (3) zu induzieren;
Umwandeln der Energie des Arbeitsmediums, das durch die Vorrichtung passiert, in eine Leistungsabgabe mittels mindestens eines Energieumwandlungsmittels (6), die in mindestens einer der Kammern (2, 3) und/oder in dem Kommunikationskanal (4) eingerichtet ist, wobei das Mittel (6) mindestens ein magnetisches Element (7, 19) umfasst, das eingerichtet ist, um in direkten Kontakt mit dem Arbeitsmedium zu treten;
wobei das Arbeitsmedium (5) in einen flüssigen oder gasförmigen Zustand von der ersten Kammer (2) zu der zweiten Kammer (3) übertragen wird.

21. Prozess nach Anspruch 20, wobei, während des Prozesses, das Arbeitsmedium (5) eine Temperatur unterhalb des Curie-Punkts eines beliebigen magnetischen Elements des Energieumwandlungsmittels (6) aufweist, um eine Entmagnetisierung zu vermeiden.

## Revendications

1. Appareil de génération de puissance électrique comportant :
un ensemble scellé (1) incluant au moins deux chambres (2, 3) et un conduit de communication (4), dans lequel le conduit de communication (4) est agencé pour assurer une communication fluide entre lesdites deux chambres (2, 3) ;
un milieu de travail (5) à l'état liquide contenu dans au moins l'une desdites chambres (2, 3) ;
dans lequel le volume dudit milieu de travail liquide (5) est inférieur à la contenance interne de l'ensemble ;
dans lequel l'appareil est configuré de sorte que le chauffage du milieu de travail liquide (5) contenu dans une première chambre (2) de l'ensemble induit un transfert du milieu de travail (5), soit à l'état liquide, soit à l'état vapeur, de ladite première chambre (2) vers une seconde chambre (3) de l'ensemble, à travers un conduit de communication (4) entre ladite première chambre (2) et ladite seconde chambre (3) ;
l'appareil comportant en outre au moins un dispositif de conversion d'énergie (6) agencé dans au moins une desdites chambres (2, 3) et/ou dans le conduit de communication (4) et configuré pour transformer l'énergie du milieu de travail (5) traversant l'appareil en une sortie de puissance électrique,
dans lequel ledit dispositif de conversion d'énergie inclut au moins un élément magnétique (7, 19), ledit au moins un élément magnétique étant agencé pour entrer en contact direct avec le milieu de travail,
**caractérisé en ce que** :
une condition de vide est prévue dans l'ensemble (1), de sorte que la température d'ébullition dudit milieu de travail liquide (5) dans l'ensemble (1) soit inférieure à la température d'ébullition du même liquide à pression ambiante ; et
ledit ensemble (1) inclut plus de deux chambres formant une séquence de chambres, et dans lequel le milieu de travail (5) est transféré à travers les chambres au moyen d'une pluralité d'étapes de transfert, chaque étape étant un transfert d'une première chambre vers une seconde chambre à côté de la première chambre dans la séquence, le transfert du milieu de travail (5) étant réalisé sous l'effet du chauffage de l'une quelconque des chambres de l'appareil, dans lequel la séquence de chambres forme un circuit fermé et le processus est effectué cycliquement pendant que le milieu de travail (5) traverse la séquence de chambres en circuit fermé.

2. Appareil selon la revendication 1), dans lequel ledit milieu de travail liquide (5) est un liquide pur ou un mélange liquide et présente un point d'ébullition inférieur au point d'ébullition de l'eau.

3. Appareil selon l'une quelconque des revendications précédentes, dans lequel ledit ensemble (1) est configuré de sorte qu'un ou plusieurs des conduits de communication (4) agissent en tant qu'éléments de liaison et/ou éléments d'appui pour deux ou plusieurs des chambres (2, 3, 8 à 13).

4. Appareil selon l'une quelconque des revendications précédentes, dans lequel l'ensemble (1) est configuré de sorte que le milieu de travail (5) sortant de ladite première chambre (2) à travers un conduit de communication (4) retourne dans la même première chambre (2) soit à travers le même conduit de communication (4), soit à travers un conduit de communication (14) séparé.

5. Appareil selon l'une quelconque des revendications précédentes, dans lequel une ou plusieurs barrières (15) sont prévues en liaison avec les chambres et/ou avec les conduits de communication (4), lesdites barrières (15) étant entraînées pour empêcher un reflux du milieu de travail (5) d'une chambre vers une chambre précédente.

6. Appareil selon l'une quelconque des revendications précédentes, dans lequel ledit dispositif de conversion d'énergie inclut au moins un élément magnétique rotatif (7) ou un élément magnétique mobile (19), et au moins une bobine ou un solénoïde (16) couplé(e) par induction à l'élément magnétique, agencé(e) de sorte qu'une rotation ou un déplacement de l'élément magnétique (7, 19) induise un courant électrique dans la bobine ou le solénoïde (16).

7. Appareil selon l'une quelconque des revendications précédentes, dans lequel ledit dispositif de conversion d'énergie inclut au moins un élément magnétique rotatif (7) qui est agencé pour tourner sous l'effet de la poussée dudit milieu de travail (5) lorsque ledit milieu de travail (5) est déplacé d'une chambre vers une autre chambre.

8. Appareil selon la revendication 7, dans lequel ledit élément magnétique rotatif (7) est supporté par une barre (17), ladite barre (17) étant de préférence à l'intérieur d'un conduit de communication (4), dans lequel l'axe de ladite barre est de préférence parallèle à un axe longitudinal (18) dudit conduit de communication, dans lequel soit ladite barre (17) est une barre rotative tirée par lesdits éléments rotatifs (7) sous l'effet de la poussée dudit milieu de travail, soit ladite barre (17) est une barre fixe pendant que lesdits éléments rotatifs (7) tournent autour de ladite barre.

9. Appareil selon la revendication 8, incluant une pluralité de barres rotatives pour supporter des éléments magnétiques rotatifs et dans lequel au moins une première barre rotative est reliée à une ou plusieurs secondes barres rotatives de manière à augmenter la vitesse de rotation desdites une ou plusieurs secondes barres rotatives.

10. Appareil selon la revendication 8 ou 9, dans lequel :
une bobine ou un solénoïde (16) est situé(e) dans une position adjacente et de préférence enroulé(e) sur une enceinte à l'intérieur de laquelle l'élément magnétique rotatif (7) est disposé pour tourner, ou
une bobine ou un solénoïde (16) constitue lui-même une enceinte à l'intérieur de laquelle ledit élément magnétique rotatif est disposé pour tourner, de sorte que la rotation de l'élément magnétique rotatif produise un courant électrique dans la bobine ou le solénoïde (16).

11. Appareil selon l'une quelconque des revendications précédentes, dans lequel ledit dispositif de conversion d'énergie (6) inclut au moins un aimant mobile (19) agencé pour être déplacé par le milieu de travail (5) d'une chambre vers une autre à travers un conduit de communication (4), incluant en outre au moins un dispositif, de préférence sous la forme d'un boîtier à grille (20), agencé dans une chambre pour guider ledit aimant mobile (19) lors de son déplacement à travers la chambre et empêcher ledit aimant de tomber dans la chambre.

12. Appareil selon la revendication 11, incluant une pluralité d'aimants mobiles (19) assemblés, éventuellement avec des éléments d'espacement entre eux, pour former un seul élément mobile.

13. Appareil selon la revendication 11 ou 12, dans lequel des aimants mobiles (19) sont agencés de sorte que, en se déplaçant à travers le dispositif, chaque pôle (25) d'un aimant soit face à un pôle d'un aimant précédent ou suivant de même polarité.

14. Appareil selon l'une quelconque des revendications précédentes, dans lequel ledit dispositif de conversion d'énergie (6) inclut au moins une bobine ou un solénoïde (16) et au moins un élément magnétique (7, 19) agencé pour tourner ou se déplacer par rapport à la bobine ou au solénoïde (16), fournissant ainsi un champ magnétique variable dans la bobine ou le solénoïde (16) et une force électromotrice induite.

15. Appareil selon l'une quelconque des revendications précédentes, dans lequel lesdits éléments magnétiques (7, 19) incluent des aimants permanents.

16. Appareil selon l'une quelconque des revendications précédentes, dans lequel le(s)dit(s) conduit(s) de communication (4) est(sont) constitué(s) d'un métal électriquement conducteur.

17. Appareil selon l'une quelconque des revendications précédentes, incluant au moins un conduit de communication (4), dans lequel une bobine ou un solénoïde (16) est enroulé autour dudit conduit, ou une bobine ou un solénoïde constitue ledit conduit de communication (4).

18. Appareil selon l'une quelconque des revendications précédentes, comportant une pluralité de bobines ou de solénoïdes (16), dans lequel au moins certains des bobines ou des solénoïdes sont reliés électriquement entre eux.

19. Appareil selon l'une quelconque des revendications précédentes, incluant une combinaison d'éléments magnétiques rotatifs (7) et d'aimants mobiles (19).

20. Procédé de production de puissance électrique, comportant :
la fourniture d'un appareil avec un ensemble scellé (1) selon l'une quelconque des revendications 1 à 19 ;
la fourniture d'un milieu de travail (5) à l'état liquide contenu dans au moins l'une des chambres (2, 3) dudit ensemble scellé ;
la formation d'une condition de vide dans l'ensemble (1), de sorte que la température d'ébullition dudit milieu de travail liquide (5) dans l'ensemble soit inférieure à la température d'ébullition du même liquide à pression ambiante ;
le chauffage du milieu de travail liquide (5) contenu dans une première chambre (2) de l'ensemble de manière à induire un transfert du milieu de travail de ladite première chambre (2) vers une seconde chambre (3) de l'ensemble (1), à travers un conduit de communication (4) entre ladite première chambre (2) et ladite seconde chambre (3) ;
la transformation d'énergie du milieu de travail traversant l'appareil en une sortie de puissance au moyen d'au moins un dispositif de conversion d'énergie (6) agencé dans au moins l'une desdites chambres (2, 3) et/ou dans le conduit de communication (4), dans lequel ledit dispositif (6) inclut au moins un élément magnétique (7, 19) agencé pour entrer en contact direct avec le milieu de travail ;
dans lequel le milieu de travail (5) est transféré de ladite première chambre (2) vers ladite seconde chambre (3) à l'état liquide ou à l'état gazeux.

21. Procédé selon la revendication 20, dans lequel, pendant le procédé, le milieu de travail (5) présente une température inférieure au point de Curie de tout élément magnétique du dispositif de conversion d'énergie (6) pour éviter la démagnétisation.
